# EUROPÄISCHE PATENTSCHRIFT

(11) **EP 2 047 632 B1**
(45) Veröffentlichungstag und Bekanntmachung des Hinweises auf die Patenterteilung: **24.06.2015**
(21) Anmeldenummer: 06762877.6
(22) Anmeldetag: 28.07.2006
(51) Int. Cl.: H04L 12/18, H04M 3/56

(54) **VERFAHREN ZUM DURCHFÜHREN EINER SPRACHKONFERENZ UND SPRACHKONFERENZSYSTEM**
METHOD FOR CARRYING OUT A VOICE CONFERENCE, AND VOICE CONFERENCE SYSTEM
PROCÉDÉ POUR RÉALISER UNE CONFÉRENCE VOCALE, ET SYSTÈME DE CONFÉRENCE VOCALE

(43) Veröffentlichungstag der Anmeldung: 15.04.2009
(73) Patentinhaber: Unify GmbH & Co. KG, 81379 München (DE)
(72) Erfinder: GILG, Virginie, 80469 München (DE); HARTMANN, Siegfried, 85402 Kranzberg (DE); KLEEMANN, Tobias, 81479 München (DE); SCHMID, Walter, 80686 München (DE)
(74) Vertreter: Fritzsche, Thomas
(86) Internationale Anmeldenummer: PCT/EP2006/007494
(87) Internationale Veröffentlichungsnummer: WO 2008/011901

(56) Entgegenhaltungen:
- EP-A- 1 113 657
- EP-B1- 1 298 906
- US-B1- 6 697 342

## Beschreibung

Sprachkonferenzsysteme erlauben ein Zusammenschalten von mehreren Sprachendeinrichtungen zu einer Telefonkonferenz, so dass einem jeweiligen Teilnehmer die über jeweilige Mikrofone der Sprachendeinrichtungen der übrigen Teilnehmer aufgenommenen Audiosignale als gemischtes Signal zur Audio-Ausgabe zugeführt wird. Das gemischte Signal - im Folgenden auch Mischsignal genannt - für einen Teilnehmer ist dabei eine Überlagerung aller anliegenden Audio-Signale, jedoch ohne das Audiosignal des Teilnehmers, da dieser seine selbst gesprochenen Beiträge zur Konferenz nicht selber hören braucht bzw. nicht hören darf, da sich dadurch eine Art ungewollter Echo-Effekt des eigenen Gesprochenen einstellen würde. Somit muss für jeden der N Teilnehmer einer Telefonkonferenz ein spezifisches Mischsignal gebildet werden, bei dem die (N-1) Sprachsignale der anderen Teilnehmer der Telefonkonferenz zu dem spezifischen Mischsignal verarbeitet werden.

Beispielsweise bei paketbasierten Kommunikationssystemen mit Sprachendeinrichtungen, die mittels paketbasierter Verfahren über ein paketbasiertes - beispielsweise IP-basiertes (IP: Internet Protocol) - Netzwerk kommunizieren, werden über ein Mikrofon aufgenommene Audiosignale mittels eines Kodierers in Datenpakete für das paketbasierte Netzwerk gewandelt und Datenpakete aus dem paketbasierten Netzwerk mittels eines Dekodierers in Audiosignale für eine Audio-Ausgabe über einen - beispielsweise in einem Telefonhörer befindlichen - Lautsprecher gewandelt. Eine kombinierte Kodier- und Dekodiereinheit wird üblicherweise als CODEC (Coding/Decoding) bezeichnet. Bekannte Kodierverfahren wurden beispielsweise durch die ITU-T (ITU-T: Telecommunication Standardization Sector der ITU; ITU: International Telecommunication Union) standardisiert. Dies sind beispielsweise die CODECs mit den Bezeichnungen G.711, G.726 oder G.729. Diese CODECs unterscheiden sich insbesondere durch die jeweilige Sprachqualität, die jeweilige Kompressionsrate und die jeweilige Komplexität des Kodierverfahrens. Beispielsweise zeichnet sich der CODEC G.729 dadurch aus, dass er für eine hohe Komprimierung bei vergleichsweise guter Sprachqualität eingesetzt werden kann, wobei jedoch rechenintensive Operationen durchgeführt werden müssen.

Häufig unterstützen Sprachendeinrichtungen mehrere CODECs, wobei für eine Verbindung und/oder einen Teilabschnitt einer Verbindung für die jeweiligen Kommunikationspartner ein gemeinsamer CODEC ausgehandelt wird.

Um Sprachendeinrichtungen über eine Telefonkonferenz miteinander zu verbinden, wird üblicherweise so vorgegangen, dass im Sprachkonferenzsystem von den Sprachendeinrichtungen eingehende kodierte Sprachdaten dekodiert werden, daraus für die jeweiligen Sprachendeinrichtungen jeweils ein Mischsignal erzeugt wird und das jeweilig erzeugte Mischsignal mit einem für die jeweilige Sprachendeinrichtung passenden Kodierer umgesetzt wird. Die jeweils resultierenden gemischten Sprachdaten werden daraufhin an die jeweiligen Sprachendeinrichtungen für eine jeweilige Sprachausgabe mittels paketorientierten Verfahren übermittelt.

Daraus ergibt sich, dass bei einer Telefonkonferenz mit N Teilnehmern durch das Sprachkonferenzsystem gleichzeitig N eingehende Sprachdatenströme dekodiert werden und die anschließend gebildeten N Mischsignale mittels N Kodierern in N ausgehende Sprachdatenströme gewandelt werden. Dies kann insbesondere bei Telefonkonferenzen mit vielen Teilnehmern zu einem erheblichen Rechenaufwand für die Kodierung und Dekodierung führen. Darüber hinaus muss eine große Anzahl an Kodierern und Dekodierern vorgehalten werden um auch Telefonkonferenzen mit vielen Teilnehmern zu unterstützen.

Um die Komplexität der Kodierung und Dekodierung zu verringern, kann in Sprachkonferenzsystemen vorgesehen sein, lediglich CODECs zu verwenden, die wenig Rechenleistung benötigen. Doch erweisen sich derartige, weniger rechenintensive CODECs überwiegend als nachteilig bezüglich der Sprachqualität und/oder der benötigten Bandbreite für die Übertragung der kodierten Sprachdaten.

Alternativ - und zur Lösung des Problems des hohen Rechenaufwands - kann ein Sprachkonferenzsystem auf eine Dekodierung und ein Mischen der dekodierten Signale verzichten, indem die kodierten Sprachdaten der jeweiligen Sprachendeinrichtungen an alle weiteren Sprachendeinrichtungen weitergeleitet werden und erst jeweils in den Sprachendeinrichtungen dekodiert und gemischt werden. Ein derartiges Vorgehen wirft aber andere bzw. weitere Probleme auf, da sich die Bandbreitenanforderungen zu den Sprachendeinrichtungen stark erhöhen und die Sprachendeinrichtungen dafür vorgesehen sein müssen, mehrere eingehende Sprachdatenströme parallel verarbeiten zu können. Somit erhöht sich die Komplexität in den Sprachendeinrichtungen deutlich.

Bei allen vorgenannten Verfahren erweist es sich als schwierig, durch das Sprachkonferenzsystem eine große Anzahl an Teilnehmern bedienen zu können, ohne dass die Rechenkomplexität im Sprachkonferenzsystem zu sehr ansteigt und ohne dass die Sprachqualität oder die Übertragungsbandbreite deutlich negativ beeinflusst wird.

Die US 6,697,342 B1 beschreibt ein Konferenzsystem und ein entsprechendes Verfahren zur Durchführung einer digitalen Audio-Konferenz, bei dem die Audiosignale von N Konferenzteilnehmern dekodiert werden, um aus den dekodierten Signalen ein Signal auszuwählen, welches in kodierter Form N-1 Konferenzteilnehmern zugeführt wird.

Die EP 1 298 906 A1 beschreibt ein Telekonferenzsystem und ein entsprechendes Verfahren, bei dem ein Codec zur Kodierung eines kombinierten Sprachsignals in Abhängigkeit von der Anzahl der gleichzeitig aktiven Sprecher ausgewählt wird.

Die EP 1 113 657 A1 beschreibt ein Gerät und ein Verfahren für die packetbasierte Medienkommunikation, bei dem (siehe z.B. Fig. 7) einem primären Sprecher (A) und einem sekundären Sprecher (B) jeweils die kodierten Sprachsignale des jeweils anderen Sprechers zugeführt werden, und bei dem den anderen (inaktiven) Konferenzteilnehmern (D, D, ..., Z) ein kodiertes und gemischtes Sprachsignal zugeführt wird, das durch Dekodierung der Sprachsignale der aktiven Sprecher (A und B), anschließendes Mischen dieser dekodierten Signale und anschließendes Kodieren des gemischten Signals erzeugt wird.

Der vorliegenden Erfindung liegt die Aufgabe zugrunde, ein Verfahren und ein Sprachkonferenzsystem zur Durchführung einer Sprachkonferenz anzugeben, bei dem selbst bei einer hohen Anzahl an Konferenz-Teilnehmern eine Rechenkomplexität für die Kodierung aller Sprachsignale gering gehalten wird.

Gelöst wird diese Aufgabe durch ein Verfahren zum Durchführen einer Sprachkonferenz gemäß Patentanspruch 1, sowie durch ein Sprachkonferenzsystem gemäß Patentanspruch 14.

Vorteilhafte Ausführungsformen und Weiterbildungen des Verfahrens sind in den abhängigen Ansprüchen angegeben.

Bei dem erfindungsgemäßen Verfahren zum Durchführen einer Sprachkonferenz mit zumindest drei Sprachendeinrichtungen in einem Kommunikationssystem weisen die - vorzugsweise für eine gleichzeitige, bidirektionale Kommunikation vorgesehenen - Sprachendeinrichtungen jeweils einen Empfangskanal und einen Aufnahmekanal auf. Der Empfangskanal ist zum Empfangen von kodierten, bei der Sprachkonferenz anfallenden Sprachdaten für ein Ausgeben von durch Dekodieren der empfangenen Sprachdaten gebildeten Sprachsignalen an der jeweiligen Sprachendeinrichtung vorgesehen. Der Aufnahmekanal ist zum Bereitstellen von kodierten Sprachdaten für die Sprachkonferenz vorgesehen, wobei die bereitzustellenden Sprachdaten mittels Kodieren aus an der jeweiligen Sprachendeinrichtung aufgenommenen Sprachsignalen gebildet werden. In dem erfindungsgemäßen Verfahren werden zumindest eine der Sprachendeinrichtungen zumindest zeitweise derart einer ersten Gruppe zugeordnet, dass für diese die über ihre jeweiligen Aufnahmekanäle bereitgestellten Sprachdaten jeweils zu Einzelsprachsignalen dekodiert werden, diese Einzelsprachsignale zu einem Summensprachsignal überlagert werden und das Summensprachsignal in erste Summensprachdaten kodiert wird. Weiterhin werden zumindest zwei der Sprachendeinrichtungen zumindest zeitweise derart einer zweiten Gruppe zugeordnet, so dass die zweite Gruppe lediglich Sprachendeinrichtungen umfasst, bei denen eine weitgehende Inaktivität an ihren jeweiligen Aufnahmekanälen erkannt wird. Diesen, der zweiten Gruppe zugeordneten Sprachendeinrichtungen werden über ihre jeweiligen Empfangskanäle erfindungsgemäß die ersten Summensprachdaten für eine jeweilige Ausgabe der ersten Summensprachdaten zugeführt werden.

Die Erfindung erweist sich insbesondere als vorteilhaft, als dass ein einziges, gemeinsames Summensprachsignal aus mehreren Einzelsprachsignale gebildet wird, und das kodierte Summensprachsignal - d.h. die ersten Summensprachdaten - ohne spezifische Veränderung mehreren Sprachendeinrichtungen zugeführt wird. Somit wird lediglich ein einzelnes Sprachsignal - das Summensprachsignal - vorzugsweise mittels eines gemeinsamen CODECs kodiert, wodurch die Anzahl der in der Sprachkonferenz gleichzeitig verwendeten CODECs deutlich reduziert werden kann. Werden beispielsweise X inaktive Sprachendeinrichtungen der zweiten Gruppe zugeordnet, so würden zur Kodierung von endeinrichtungsspezifischen Sprachdaten ohne Verwendung des erfindungsgemäßen Verfahrens üblicherweise X CODECs gleichzeitig eingesetzt. Dagegen braucht bei Verwendung des erfindungsgemäßen Verfahrens lediglich ein CODEC eingesetzt werden. Somit können X-1 CODECs eingespart werden, da entsprechend weniger CODECs benötigt werden. Die Anzahl der maximal benötigten CODECs für die maximale Menge an Teilnehmern einer Sprachkonferenz kann beispielsweise im Rahmen von Vorfelduntersuchungen für in realer Umgebung ablaufenden Telefonkonferenzen experimentell ermittelt werden.

Aus dem Vorgenannten ist ersichtlich, dass einerseits ein Sprachkonferenzsystem zur Durchführung des erfindungsgemäßen Verfahrens weniger CODECs vorhalten kann als es Teilnehmer in der Sprachkonferenz gibt und trotzdem alle Teilnehmer mit Sprachdaten bedienen kann. Andererseits reduziert sich durch die weniger gleichzeitig aktiven CODECs - d.h. die Aufsummierung aller gleichzeitig eingesetzten CODECs über alle Sprachendeinrichtung in der Sprachkonferenz bzw. über alle Sprachendeinrichtung aller gleichzeitig stattfindenden Sprachkonferenzen - die Rechenkomplexität im Sprachkonferenzsystem, so dass entweder Rechenkapazität eingespart werden kann oder qualitativ bessere CODECs eingesetzt werden können, wobei Letzteres wiederum positive Auswirkungen auf die Sprachqualität und die belegte Übertragungsbandbreite hat.

Unter einer Überlagerung von Einzelsprachsignalen kann eine Summenbildung der Einzelsprachsignale und gegebenenfalls eine der Summenbildung nachgeschalteten Signaldämpfung verstanden werden. Letztgenannter Schritt kann dabei sicherstellen, dass ein Maximalpegel durch das Summensprachsignal nicht überschritten werden kann. Bei der Überlagerung können weiterhin die Einzelsprachsignale auf ein gemeinsames Lautstärkeniveau angepasst werden, indem Einzelsprachsignale bei der Überlagerung unterschiedlich gewichtet werden.

In einer vorteilhaften Ausgestaltung der Erfindung kann die erste Gruppe derart gebildet werden, däss zu dieser lediglich Sprachendeinrichtungen zugeordnet werden, bei denen eine Aktivität an ihren jeweiligen Aufnahmekanälen erkannt wird. Somit können die erste und die zweite Gruppe disjunkt gehalten werden. Dies ist insofern vorteilhaft, als dass bei der Bildung der Überlagerung lediglich aktive Einzelsprachsignale beachtet werden müssen. Die Anzahl an zu überlagernden Einzelsprachsignalen und somit auch die Komplexität der Überlagerung verringern sich dadurch. Darüber hinaus wird auch die Sprachqualität des überlagerten Summensprachsignals verbessert, da Sprachsignale die zwar - üblicherweise störende - Hintergrundgeräusche enthalten aber ansonsten keinerlei Aktivität aufweisen, nicht in das Summensprachsignal eingehen und durch die Erfindung somit implizit herausgefiltert werden.

Alternativ kann in einer weiteren vorteilhaften Ausgestaltung der Erfindung die erste Gruppe derart gebildet werden, dass auch weitgehend inaktive oder alle Sprachendeinrichtungen der Sprachkonferenz der ersten Gruppe zugeordnet werden. Auf diese Weise braucht keinerlei Vorüberprüfung der Einzelsprachsignale bezüglich Aktivität/Inaktivität durchgeführt werden, wodurch Verzögerungen bei der Durchführung des Verfahrens vermieden werden können. Das Summensprachsignal umfasst in dieser Ausgestaltung auch inaktive Einzelsprachsignale, die sich durch weitgehende Inaktivität auszeichnen, wobei die aktiven Sprachendeinrichtungen dominant sind, so dass das Summensprachsignal weiterhin den Zweck erfüllt im wesentlichen ein überlagertes Signal der aktiven Sprachendeinrichtung zu sein.

Die Zuordnung bzw. Unterteilung in erste und/oder zweite Gruppe kann gemäß einer vorteilhaften Weiterbildung der Erfindung dynamisch erfolgen. Als eine erste Möglichkeit besteht nach Ablauf von regelmäßigen oder unregelmäßigen Zeitabschnitten eine Überprüfung einer Gruppenzugehörigkeit der Sprachendeinrichtungen durchzuführen, indem nach Ablauf eines der Zeitabschnitte die Aktivität der Sprachendeinrichtungen ausgewertet wird. Gemäß der zu diesem Zeitpunkt herrschenden Aktivität oder gemäß der während des Zeitabschnitts Aktivitätshäufigkeit und/oder -dauer können diejenigen Sprachendeinrichtungen mit erkannter Aktivität am Aufnahmekanal als aktive Sprecher gekennzeichnet werden und der ersten Gruppe zugeordnet werden. Analog, können bei erkannter Inaktivität am Aufnahmekanal die zugehörige Sprachendeinrichtungen als passive Zuhörer gekennzeichnet und in die zweite Gruppe gruppiert werden.

Darüber hinaus oder alternativ dazu besteht die Möglichkeit die Zuordnung zu den Gruppen ausgelöst durch eine Aktivitätsänderung - beispielsweise ein Wechsel von weitgehender Inaktivität zu Aktivität oder entgegengesetzt - an einem der Aufnahmekanäle oder ausgelöst durch eine Benutzeraktion an einer der Sprachendeinrichtungen neu durchzuführen. Eine Benutzeraktion kann beispielsweise ein Tastendruck an einer der Sprachendeinrichtungen sein mittels der angezeigt wird, dass ein jeweiliger Teilnehmer sich aktiv an der Sprachkonferenz beteiligen möchte. Alternativ kann die Benutzeraktion durch einen Moderator der Sprachkonferenz durchgeführt werden, um einzelnen Teilnehmern Rederecht zuzuteilen.

In einer weiteren vorteilhaften Weiterbildung der Erfindung kann eine dritte Gruppe gebildet werden, die analog zur zweiten Gruppe lediglich Sprachendeinrichtungen umfasst, die weitgehende Inaktivität an ihren Aufnahmekanälen aufweisen. Vorzugsweise werden der zweiten sowie der dritten Gruppe zum Kodieren der gleichermaßen zugeführten Summensprachsignale jeweils ein sich voneinander unterscheidender Kodierer eingesetzt, so dass den Sprachendeinrichtung der zweiten Gruppe über einen ersten Kodierer kodierte erste Summensprachdaten zugeführt werden, während den Sprachendeinrichtung der dritten Gruppe über einen zweiten Kodierer kodierte, zweite Summensprachdaten zugeführt werden. Somit können beispielsweise die Gruppen derart gebildet werden, dass den CODEC G.729 unterstützende Sprachendeinrichtungen zur zweiten Gruppe zugeordnet werden, wogegen in der dritten Gruppe G.711 unterstützende Sprachendeinrichtungen gruppiert werden. Auf diese Weise lässt sich erwirken, dass der jeweils qualitativ beste CODEC einer jeweiligen Sprachendeinrichtung verwendet wird. Vorzugsweise sind die zweite und die dritte Gruppe disjunkt, so dass einer dieser beiden Gruppen zugeordneten Sprachendeinrichtung genau nur die ersten oder alternativ nur die zweiten Summensprachdaten erhält, wobei eine Sprachendeinrichtung, die mehrere CODECs unterstützt, vorzugsweise in die Gruppe zugeordnet wird, die die Ausgabe des qualitativ hochwertigsten Ausgabesignals und/oder die die geringste Bandbreitenbelastung durch eine Übertragung der jeweiligen Summensprachdaten ermöglicht.

Die vorstehend genannten Vorteile, Weiterbildungen und Ausführungsformen gelten neben dem erfindungsgemäßen Verfahren in analoger Weise für das erfindungsgemäße Sprachkonferenzsystem.

Ein Ausführungsbeispiel der Erfindung wird nachfolgend an Hand einer Zeichnung näher erläutert.

Dabei zeigt in schematischer Darstellung
- Figur 1: ein Kommunikationssystem mit einem Sprachkonferenzserver und an einer Sprachkonferenz beteiligten Sprachendeinrichtungen und
- Figur 2-5: Komponenten des Sprachkonferenzservers und einen logischen Signal- und Datenfluß zwischen diesen Komponenten im Rahmen einer Sprachkonferenz in jeweils unterschiedlichen Verfahrensphasen.

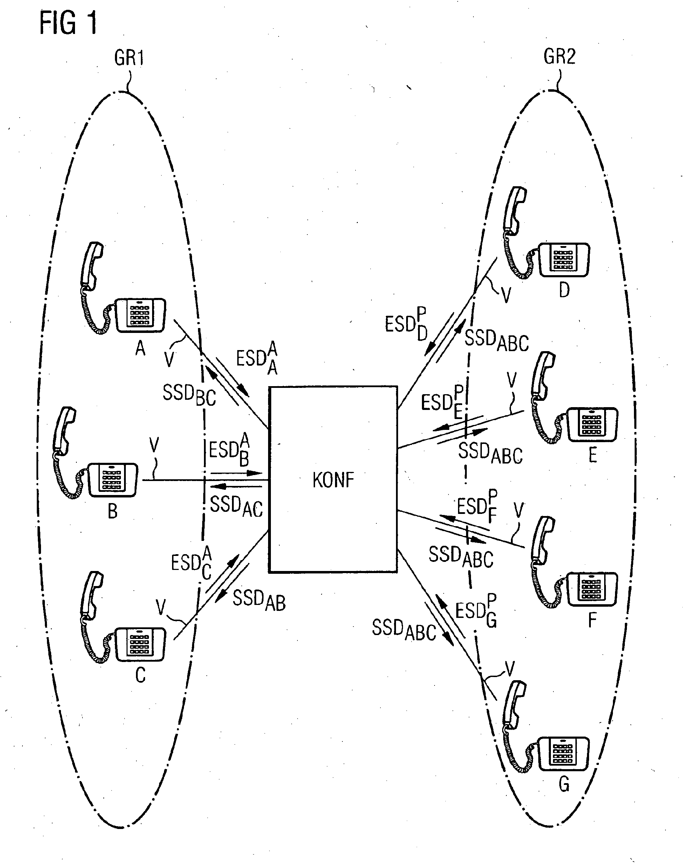

In Figur 1 ist in schematischer Darstellung ein Kommunikationssystem mit einem Sprachkonferenzsystem KONF und mehreren Sprachendeinrichtungen A, B, C, D, E, F und G dargestellt. Das Sprachkonferenzsystem KONF sowie die Sprachendeinrichtungen A, B, C, D, E, F, G basieren dabei im vorliegenden Ausführungsbeispiel auf paketorientierten Prinzipien, wobei zur Übertragung von Sprache und Signalisierungen ein nicht näher dargestelltes IP-basiertes Übertragungsnetzwerk vorgesehen ist. Die Kopplung der Sprachendeinrichtungen A, B, C, D, E, F, G an das Sprachkonferenzsystem KONF ist in Figur 1 jeweils durch eine Verbindung V zwischen den jeweiligen Sprachendeinrichtung A, B, C, D, E, F, G und dem Sprachkonferenzsystem KONF veranschaulicht.

In den Figuren 1 bis 5 sei angenommen, dass bereits eine Sprachkonferenz über das Sprachkonferenzsystem KONF aufgebaut und eine Verbindungsaufbauphase bereits abgeschlossen ist. Beteiligt an dieser Sprachkonferenz seien alle vorstehend genannten Sprachendeinrichtungen A bis G.

Die in Figur 1 dargestellte Ausgangssituation sei, dass in der Sprachkonferenz KONF die Sprachendeinrichtungen A, B und C aktiv bezüglich übermittelter Sprache sind, während die Sprachendeinrichtungen D, E, F und G inaktiv sind. Diese Unterteilung sei in Figur 1 durch die ellipsenhafte Darstellung einer ersten und zweiten Gruppen GR1 und GR2 angedeutet, wobei die Ellipse für GR1 die Sprachendeinrichtungen A, B, C umschließt und die Ellipse für GR2 die übrigen Sprachendeinrichtungen D, E, F, G. Über die Verbindungen V laufenden Sprachdatenströme werden in der Figur 1 durch gerichtete Pfeile dargestellt, wobei Sprachdatenströme, die von den jeweiligen Sprachendeinrichtungen A, B, C, D, E, F, G an das Sprachkonferenzsystem KONF übermittelt werden als Einzelsprachdaten ESD bezeichnet werden, während Sprachdatenströme, die ausgehend vom Sprachkonferenzsystem KONF an die jeweiligen Sprachendeinrichtungen A, B, C, D, E, F, G übermittelt werden, als Sümmensprachdaten SSD gekennzeichnet werden.

Ob sich ein Teilnehmer an einer der Sprachendeinrichtungen A, B, C, D, E, F, G aktiv oder lediglich passiv an einer Sprachkonferenz beteiligt, wird am Bezugszeichen ESD durch ein hochgestelltes A für aktiv bzw. ein hochgestelltes P für passiv angedeutet (es ergibt sich somit die Bezeichnung ESD^{A} oder ESD^{P})). Die, die jeweiligen Einzelsprachdaten ESD erzeugende, jeweilige Sprachendeinrichtung A, B, C, D, E, F, G wird am Bezugszeichen ESD durch den tiefer gestellten Buchstaben der Sprachendeinrichtung A, B, C, D, E, F, G dargestellt. So sei beispielsweise ein passiver Datenstrom von Einzelsprachdaten ausgehend von der Sprachendeinrichtung B durch das Bezugszeichen ESD^{P}_{B} gekennzeichnet. Bezüglich der Summensprachdaten wird am jeweiligen Bezugszeichen SSD angegeben, von welchen Quelldatenströmen ein Summensprachdatenstrom überlagert wird. Dies wird durch Tieferstellen der Buchstaben der Quell-Sprachendeinrichtungen A, B, C, D, E, F, G verdeutlich. So wird beispielsweise ein aus den eingehenden Datenströmen der Sprachendeinrichtung A und B als SSD_{AB} bezeichnet.

Im Sprachkonferenzsystem KONF wird im vorliegenden Ausführurigsbeispiel über einen vorgegebenen Zeitraum eine Analyse der eingehenden Sprachdaten durchgeführt und insbesondere analysiert, ob über den Zeitraum einer Aktivität bzw. einer Inaktivität der jeweiligen Sprachendeinrichtungen A, B, C, D, E, F, G erkannt wird. Die Analyse erfolgt anhand aller Einzelsprachdaten ESD bzw. daraus dekodierten Einzelsprachsignalen der Sprachendeinrichtung A, B, C, D, E, F, G. Das Kommunikationssystem von Figur 1 ist dabei zu einem Zeitpunkt dargestellt, bei dem die Sprachendeinrichtungen A, B und C als aktiv erkannt und die Sprachendeinrichtungen D, E, F und G als inaktiv ermittelt wurden. Somit gehen nach vorstehend erläuterter Nomenklatur die Einzelsprachdaten ESD^{A}_{A}, ESD^{A}_{B}, ESD^{A}_{C} für die aktiven Sprachendeinrichtungen A, B, C ein. Des Weiteren gehen für die passiven Sprachendeinrichtungen D, E, F und G die Einzelsprachdaten ESD^{P}_{D}, ESD^{P}_{E}, ESD^{P}_{F} sowie ESD^{P}_{G} beim Sprachkonferenzsystem KONF ein. Gemäß der Erfindung werden die eingehenden Einzelsprachdaten ESD^{A}_{A}, ESD^{A}_{B}, ESD^{A}_{C} der Sprachendeinrichtungen A, B und C zu Einzelsprachsignalen dekodiert und zu einem gemeinsamen Summensprachsignal überlagert - nicht dargestellt. Dieses Summensprachsignal wird in einem weiteren Schritt in Summensprachdaten kodiert. Auf Grund der Überlagerung durch die Signale der Sprachendeinrichtungen A, B und C werden diese Summensprachdaten als SSD_{ABC} bezeichnet und den passiven, das heißt durch weitere Inaktivität an ihren jeweiligen Aufnahmekanälen gekennzeichneten Sprachendeinrichtungen D, E, F, G als Ausgabedatenströme übermittelt. Somit werden allen passiven Sprachendeinrichtungen D, E, F, G dieselben Summensprachdaten SSD_{ABC} zugeführt. Die in den jeweiligen Sprachendeinrichtungen D, E, F, G empfangenen Summensprachdaten SSD_{ABC} werden daraufhin in den jeweiligen Sprachendeinrichtungen D, E, F, G dekodiert und für die jeweiligen Teilnehmer über Lautsprecher der Telefonhörer ausgegeben.

Darüber hinaus werden den aktiven Sprachendeinrichtungen A, B, C individuelle Summensprachdaten SSD übermittelt. Dies sei beispielsweise für die Sprachendeinrichtung A kodierte Daten einer endeinrichtungsspezifischen Überlagerung der Einzelsprachsignale der Sprachendeinrichtung B und Sprachendeinrichtung C. Somit wird der Sprachendeinrichtung A die kodierte Überlagerung der Einzelsprachsignale von B und C als Summensprachdaten SSD_{BC} übermittelt. Auf analoge Weise werden den weiteren aktiven Sprachendeinrichtungen B und C jeweils die Einzelsprachsignale der übrigen Sprachendeinrichtungen überlagert und anschließend kodiert zugeführt. Dies seien für die Sprachendeinrichtung B die Summensprachdaten SSD_{AC} und für die Sprachendeinrichtung C die Summensprachdaten SSD_{AB}, die jeweils endeinrichtungsspezifisch (für B bzw. C) gebildet werden.

Den jeweiligen Sprachendeinrichtungen A, B, C, D, E, F, G werden somit Summensprachdaten SSD zugeführt, die nach Dekodierung an den jeweiligen Sprachendeinrichtungen A, B, C, D, E, F, G für eine Ausgabe mittels eines Lautsprechers vorgesehen sind. Dabei enthalten die Summensprachdaten SSD jeweils die für einen Teilnehmer jeweils benötigten Audio-Anteile der Sprachkonferenz. Eine weitergehende Nachbearbeitung von Sprachsignalen oder Sprachdaten - beispielsweise mittels Überlagerung, Extraktion und/oder Inversion von Audiosignalen - in den jeweiligen Sprachendeinrichtungen A, B, C, D, E, F, G wird im Rahmen der Erfindung nicht benötigt.

Auf die Bestimmung der Aktivität und Inaktivität (oder Passivität) wurde bisher nicht näher eingegangen. Eine Aktivität zeichnet sich beispielsweise durch ein einmaliges überschreiten eines Signals über einen Schwellwertpegel aus. Alternativ kann vorgegeben sein, dass ein Pegel mehrmals überschritten werden muss, bis das Signal als aktiv eingestuft wird. Weiterhin können gemittelte und statistische Auswertungen in die Aktivitätsbewertung einbezogen werden. Es können gleichmäßige oder ungleichmäßige Zeiträume untersucht werden; darüber hinaus oder alternativ können Schwellwertüberschreitungen oder -unterschreitungen eine Neubewertung bezüglich der Aktivität auslösen.

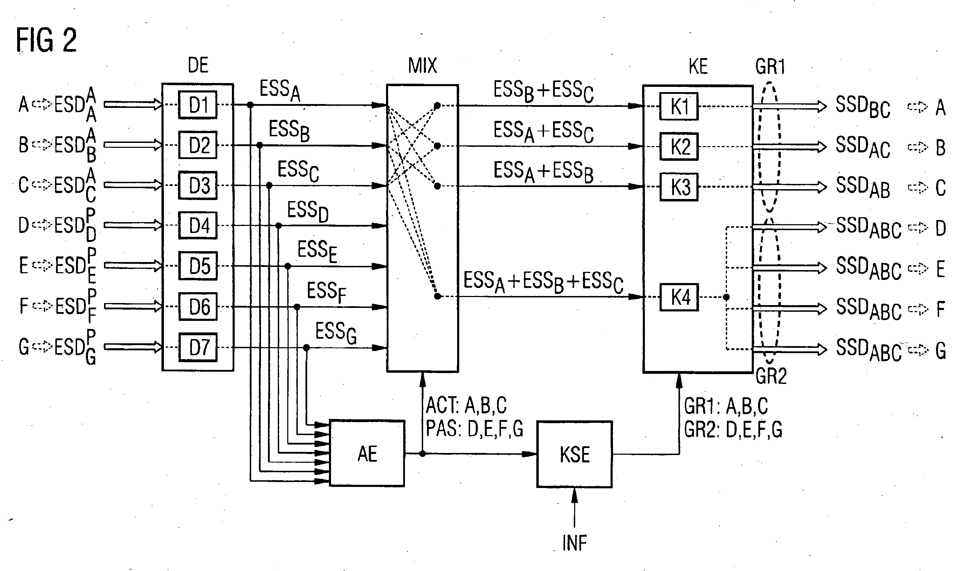

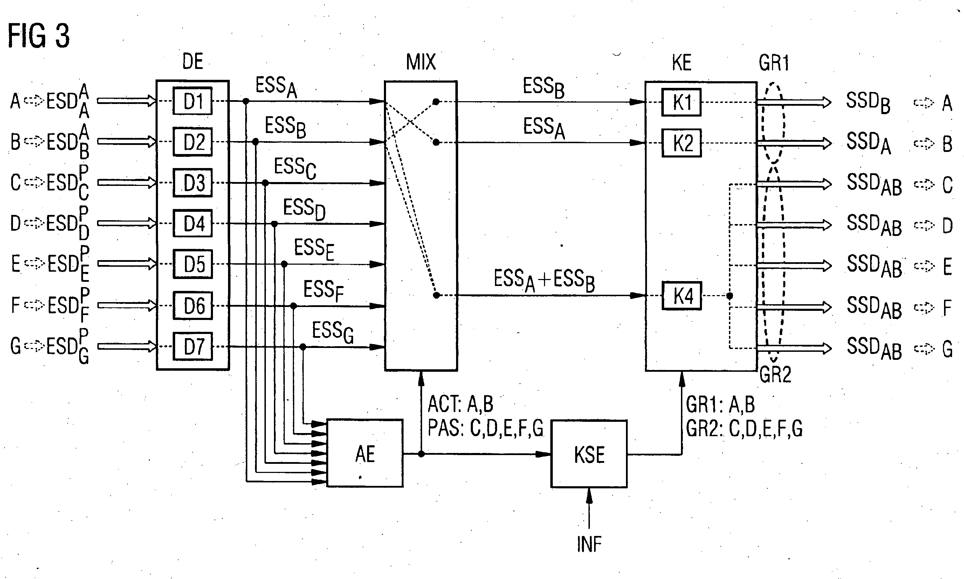

Nachdem in Figur 1 die groben Zusammenhänge bezüglich der Durchführung einer erfindungsgemäßen Sprachkonferenz erläutert wurden, wird nun anhand von Figur 2 und weiterer Figuren 3-5 erläutert, wie das Sprachkonferenzsystem KONF die Analyse der Sprachdaten und die Verarbeitung der Sprachsignale und Sprachdaten durchführt. Dabei sei in Figur 2 die Ausgangssituation mit der Situation in Figur 1 identisch; das heißt die Sprachendeinrichtungen A, B und C seien aktiv sowie die Sprachendeinrichtungen D, E, F und G inaktiv. Die für Figur 1 eingeführten Bezeichnungen der Einzelsprachdaten ESD, der Summensprachdaten SSD - inkl. der hoch- und tiefgestellten Bezeichnungen -, der Gruppen GR1, GR2 sowie der Sprachendeinrichtungen A, B, C, D, E, F, G werden auch in den Figuren 2 bis 5 beibehalten.

In den Figuren 2 bis 5 ist das Sprachkonferenzsystem KONF in Dekodiereinheit DE, Signalmischeinheit MIX, Kodiereinheit KE, Aktivitätserkennungseinheit AE, sowie Kodiersteuereinheit KSE segmentiert. Der Signalfluss in diesen Figuren wird von links nach rechts angetragen, so dass beim Sprachkonferenzsystem KONF eingehende Einzelsprachdaten ESD der Sprachendeinrichtungen A, B, C, D, E, F, G auf der linken Seite angetragen werden und Summensprachdaten SSD, die von dem Sprachkonferenzsystem KONF an die jeweiligen Sprachendeinrichtungen A, B, C, D, E, F ausgegeben werden, an der rechten Seite der jeweiligen Figuren 2 bis 5 dargestellt werden. Die Dekodiereinheit DE ist als Rechteck veranschaulicht, die mehrere Dekodierer D1 bis D7 - ebenfalls als Rechtecke veranschaulicht - umfasst. Die Dekodierer D1 bis D7 sind dabei Dekodier-Instanzen von CODECs, wie beispielsweise ein G.723- oder ein G.729-CODEC. Eingangsinformationen der Dekodiereinheit DE sind Datenpakete der Einzelsprachdaten ESD^{A}_{A}, ESD^{A}_{B}, ESD^{A}_{C}, ESD^{P}_{D}, ESD^{P}_{E}, ESD^{P}_{F}, ESD^{P}_{G} der Sprachendeineinrichtungen A, B, C, D, E, F, G. Zur Unterscheidung von paketorientierten kodierten Daten von unkodierten Sprachsignalen werden die Daten bzw. die Datenpakete in den Figuren 2 bis 5 mittels Doppelpfeile veranschaulicht, wohingegen Signale (aber auch Steuerdaten) als einfache Pfeile dargestellt sind.

Die Dekodierer D1 bis D7 der Dekodiereinheit DE besitzen als Ausgang einen Signalausgang zur Übermittlung von Einzelsprachsignalen ESS an die Signalmischeinheit MIX. In der Signalmischeinheit MIX werden, ausgehend von den eingehenden Einzelsprachsignalen ESS, verschiedene, überlagerte Mischsignale als Summensprachsignale gebildet, die wiederum an die Kodiereinheit KE übertragen werden. Diese Mischsignale (in der Figur als Addition Einzelsprachsignalen - z.B. ESS_{B}+ESS_{A} verdeutlicht) bzw. Summensprachsignale werden durch Kodier-Instanzen K1 bis K6 jeweiliger CODECs in Summensprachdaten SSD kodiert und an die jeweiligen Sprachendeinrichtungen A bis G übertragen.

Der Aktivierungserkennungseinheit AE (auch als Signalmischsteuereinheit gemäß Patentanspruch 15 bezeichenbar) werden alle über die Dekodiereinheit DE ausgegebenen Einzelsprachsignale ESS_{A}, ESS_{B}, ESS_{C}, ESS_{D}, ESS_{E}, ESS_{F}, ESS_{G} zugeführt. Alternativ dazu könnten auch bereits die Einzelsprachdaten ESD^{A}_{A}, ESD^{A}_{B}, ESD^{A}_{C}, ESD^{P}_{D}, ESD^{P}_{E}, ESD^{P}_{F}, ESD^{P}_{G}, bevor sie der Dekodiereinheit DE zugeführt werden, durch die Aktivierungserkennungseinheit AE verarbeitet werden. Die Aktivierungserkennungseinheit AE ermittelt die aktiven und passiven Sprachendeinrichtungen für einen gewissen Zeitabschnitt. Diese ermittelten Informationen werden daraufhin - in einer im Rahmen des Ausführungsbeispiels nicht näher spezifizierten Signalisierung - der Signalmischeinheit MIX und der Kodiersteuereinheit KSE zugeführt, so dass die Aktivierungserkennungseinheit AE neben dem Erkennen von Aktivität und Passivität weiterhin Funktionen einer zum Steuern des Mischens von Signalen durchführt. Mittels der zugeführten Information wird in der Signalmischeinheit MIX die Mischung der verschiedenen Einzelsprachsignale ESS_{A}, ESS_{B}, ESS_{C}, ESS_{D}, ESS_{E}, ESS_{F}, ESS_{G} gesteuert und durchgeführt.

Darüber hinaus wird der Kodiersteuereinheit KSE die Information sowie weitere Informationen INF bezüglich der CODECs der Sprachendeinrichtungen A bis G übermittelt. Die Kodiersteuereinheit KSE ermittelt daraufhin die Gruppenzuordnung der Sprachendeinrichtungen A bis G. Die ermittelte Gruppenzugehörigkeit wird dabei in den Figuren 2 bis 5 mittels gestrichelter Ellipsen an den Ausgängen der Kodiereinheit KE angedeutet. Der Signalpfad innerhalb der Dekodiereinheit DE, der Signalmischeinheit MIX, sowie der Kodiereinheit KE wird ebenfalls durch gestrichelte Linien dargestellt.

In Figur 2 werden gemäß den Darstellungen in Figur 1 die Einzelsprachdaten ESD^{A}_{A}, ESD^{A}_{B}, ESD^{A}_{C} der aktiven Sprachendeinrichtungen A, B und C der Dekodiereinheit DE zugeführt. Darüber hinaus werden die inaktiven Einzelsprachdaten ESD^{P}_{D}, ESD^{P}_{E}, ESD^{P}_{F}, ESD^{P}_{G} der Sprachendeinrichtungen D, E, F und G ebenfalls der Dekodiereinheit DE zugeführt. Eine Dekodierung erfolgt dabei individuell mittels jeweiliger Dekodierer D1 bis D7. Die Dekodierer D1 bis D7 erzeugen die jeweiligen Einzelsprachsignale ESS_{A}, ESS_{B}, ESS_{C} sowie ESS_{D}, ESS_{E}, ESS_{F} und ESS_{G}. Diese genannten Einzelsprachsignale ESS werden der Signalmischeinheit MIX sowie der Aktivierungserkennungseinheit AE zugeführt.

Die Aktivierungserkennungseinheit AE analysiert diese Einzelsprachsignale ESS und erkennt, dass die Sprachendeinrichtung A, B und C durch weitgehende Aktivität, wohingegen die Sprachendeinrichtungen D, E, F und G durch weitgehende Inaktivität ausgezeichnet sind. Dies wird mittels einer oder mehrerer Informationsmeldungen an die Signalmischeinheit MIX übermittelt. Dies ist in Figur 2 durch die Meldung ACT bzw. PAS veranschaulicht, wobei die Meldung ACT die Liste der aktiven Sprachendeinrichtungen A, B, C umfasst und die Meldung PAS eine Liste der passiven Sprachendeinrichtungen D, E, F und G. Diese Signalmischeinheit MIX verarbeitet diese Meldungen und überlagert nun jeweils zwei der drei aktiven Sprachendeinrichtungssignale ESS_{A}, ESS_{B}, ESS_{C} zu einem jeweiligen Summensprachsignal von jeweils zwei der drei Sprachendeinrichtungen A,B,C, sowie zu einer Überlagerung von allen drei Sprachendeinrichtungssignalen ESS_{A}, ESS_{B}, ESS_{C}. Eine Überlagerung der Signale der Sprachendeinrichtungen B und C - in Figur 2 als ESS_{B}+ESS_{C} bezeichnet - ist dabei für eine Ausgabe an der Sprachendeinrichtung A vorgesehen und muss dazu noch zur Kodiereinheit KE übermittelt werden. Analog findet für die Sprachendeinrichtung B eine Überlagerung der Einzelsprachsignale der Sprachendeinrichtungen A und C statt- ESS_{A}+ESS_{C} -, sowie für die Sprachendeinrichtung C eine Überlagerung der Einzelsprachsignale der Sprachendeinrichtungen A und B - ESS_{A}+ESS_{B}. Darüber hinaus wird erfindungsgemäß eine Überlagerung aller drei aktiven Sprachendeinrichtungssignale ESS_{A}+ESS_{B}+ESS_{C} durchgeführt und ebenfalls der Kodiereinheit KE zugeführt.

Die Kodiersteuereinheit KSE erhält die Meldungen bezüglich aktiver (A, B, C) und inaktiver (D, E, F, G) Sprachendeinrichtungen und fragt zusätzlich ab - angedeutet durch ein Zuführen der Information INF -, welche CODECs von welchen Sprachendeinrichtungen A, B, C, D, E, F, G unterstützt werden. Basierend auf diesen Informationen kann nun die Kodiersteuereinheit KSE die Sprachendeinrichtungen A, B, C, D, E, F, G in Gruppen organisieren, so dass in einer ersten Gruppe GR1 alle aktiven Sprachendeinrichtungen (d.h. A, B, C) enthalten sind, sowie in einer zweiten Gruppe GR2 alle passiven Sprachendeinrichtungen (d.h. D, E, F, G) zusammenge- ° fasst werden. Dies setzt voraus, dass alle passiven Sprachendeinrichtungen D, E, F und G jeweils einen gemeinsamen CODEC unterstützen, so dass die nun folgende Kodierung an den Sprachendeinrichtungen D, E, F und G wieder dekodiert werden kann.

Diese Gruppeninformation wird von der Codiersteuereinheit KSE an die Codiereinheit KE übermittelt (in Figur 2 als Meldungen "GR1:A,B,C" und "GR2:D,E,F,G" angedeutet). Daraufhin erzeugt die Codiereinheit KE jeweils eine Instanz eines Kodierers (oder holt eine Instanz aus einem vorgegebenen Pool von Kodierern), für die der ersten Gruppe GR1 zugeordneten aktiven Sprachendeinrichtungen A, B, C sowie eine gemeinsame Instanz für alle der zweiten Gruppe GR2 zugeordneten Sprachendeinrichtungen D, E, F, G. Die erstgenannten sind in der Figur 2, die Kodierer K1, K2 und K3. Der gemeinsame Kodierer für die inaktiven Sprachendeinrichtungen D, E, F, G wird in Figur 2 mit K4 bezeichnet. Der Kodierer K1 codiert die für die Sprachendeinrichtung A bestimmten Summensprachdaten SSD_{BC} mittels Kodierung der überlagerten Einzelsprachsignale ESS_{B} und ESS_{C}. In analoger Weise werden durch den Kodierer K2 die überlagerten Einzelsprachsignale ESS_{A}+ESS_{B} der Sprachendeinrichtungen A und C verarbeitet und an die Sprachendeinrichtung B mittels der Summensprachdaten SSD_{AC} weiter geleitet. Entsprechend werden durch den Kodierer K3 die überlagerten Einzelsprachdaten ESS_{A} und ESS_{B} der Sprachendeinrichtungen A und B kodiert und als Summensprachdaten SSD_{AB} die Sprachendeinrichtung C zugeführt.

Der Kodierer K4 verarbeitet die überlagerten Signale der drei aktiven Sprachendeinrichtungen A, B und C, d.h. ESS_{A}+ESS_{B}+ESS_{C}. Es werden durch den Kodierer K4 gemeinsame Summensprachdaten SSD_{ABC} erzeugt, die vervielfältigt werden und über die jeweiligen Verbindungen an die inaktiven Sprachendeinrichtungen D, E, F und G übermittelt werden.

Auf diese Weise wird für die inaktiven Sprachendeinrichtungen D, E, F und G lediglich ein Kodierer K4 benötigt, der die zuzuführenden Summensprachdaten SSD_{ABC} gemeinsam für alle vier inaktiven Sprachendeinrichtungen D, E, F, G erzeugt. Somit lässt sich gegenüber dem Stand der Technik eine Mehrzahl an Kodierern einsparen. Dieses logische Zusammenfassen von inaktiven Sprachendeinrichtungen ist in Figur 2 durch eine Ellipse mit der Bezeichnung GR2 dargestellt, die die Summensprachdaten SSD_{ABC} für die Sprachendeinrichtungen D, E, F und G umschließt.

Basierend auf der Konfiguration von und der dargestellten Situation in Figur 2 wird in Figur 3 nun die bisher aktive Sprachendeinrichtung C inaktiv, indem ein ihr zugehöriger Teilnehmer über einen gewissen Zeitraum hinweg kein Sprachsignal erzeugt, das als aktives Sprachsignal erkannt würde. Mittels der Aktivitätserkennungseinheit AE wird ermittelt, dass nun lediglich die Sprachendeinrichtungen A und B aktiv sind, währenddessen die Sprachendeinrichtungen C, D, E, F und G inaktiv sind. Dies wird der Signalmischeinheit MIX mittels der Meldungen ACT und PAS übermittelt. Daraufhin wird durch die Signalmischeinheit MIX ein Mischsignal aus den beiden aktiven Sprachendeinrichtungen A und B gebildet - ESS_{A}+ESS_{B}. Weiterhin würde die Signalmischeinheit MIX einer jeweiligen aktiven Sprachendeinrichtung ein Mischsignal der übrigen Sprachendeinrichtungen erzeugen. Da in diesem Fall lediglich zwei aktive Sprachendeinrichtungen A und B vorhanden sind, ist eine Überlagerung unter Erzeugen eines Mischsignals nicht notwendig. Es wird lediglich das Einzelsprachsignal ESS_{B} von der Sprachendeinrichtung B für die Sprachendeinrichtung A zur Verfügung gestellt, sowie umgekehrt das Einzelsprachsignal ESS_{A} von der Sprachendeinrichtung A für die Sprachendeinrichtung B. Die beiden letztgenannten Einzelsprachsignale ESS_{A} und ESS_{B} werden mittels der Kodierer K1 bzw. K2 in Summensprachdaten SSDB bzw. SSD_{A} kodiert und an die Sprachendeinrichtungen A bzw. B derart übermittelt, dass die an die Sprachendeinrichtung A übermittelten Summensprachdaten SSD_{B} lediglich eine Kodierung der Einzelsprachsignale ESS_{B} der Sprachendeinrichtung B darstellt. Analog dazu werden der Sprachendeinrichtung B lediglich die Sprachdaten der Sprachendeinrichtung A zugeführt.

Die überlagerten Summensprachsignale ESS_{A}+ESS_{B} der beiden aktiven Sprachendeinrichtungen A und B entsprechen dem erfindungsgemäßen Summensprachsignal, das nun mittels des Kodierers K4 in die ersten Summensprachdaten SSD_{AB} gewandelt werden. Diese gewandelten Summensprachdaten SSD_{AB} werden nun auf die verschiedenen Verbindungen V dupliziert und den jeweiligen inaktiven Sprachendeinrichtungen C bis G zugeführt. Dies geschieht aufgrund der Steuerung durch die Kodiersteuereinheit KSE, die erkannt hat, dass die erste Gruppe GR1 der aktiven Sprachendeinrichtungen lediglich die Sprachendeinrichtungen A und B umfasst, währenddessen die zweite Gruppe GR2 der inaktiven Sprachendeinrichtungen die Sprachendeinrichtungen C, D, E, F und G umfasst. Dies ist wiederum durch eine Ellipse mit der Bezeichnung GR2 in der Figur 3 veranschaulicht.

Basierend auf Figur 2 und Figur 3 wird deutlich, dass bei einer Sprachkonferenz, bei der üblicherweise lediglich ein Hauptsprecher und einzelne Nebensprecher teilweise zeitgleich vorhanden sind, eine deutliche Reduktion an eingesetzten Kodierern mittels der Erfindung ermöglicht wird. Dies kann in einem optimalen Extremfall soweit führen, dass lediglich zwei Kodierer eingesetzt werden müssen um alle Sprachendeinrichtungen der Sprachkonferenz bedienen zu können.

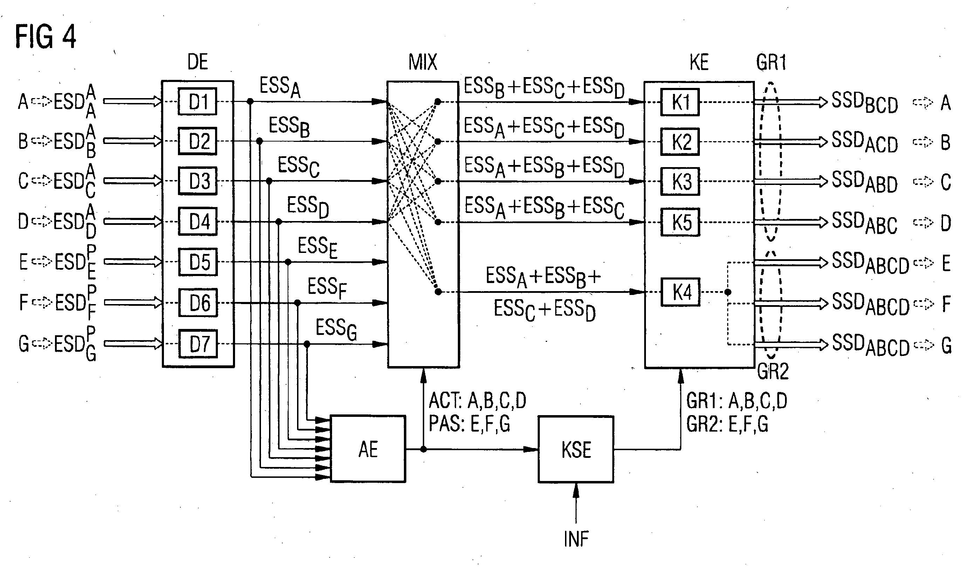

In Figur 4 wird nun basierend auf Figur 2 ein umgekehrter Ansatz betrachtet, indem ein bisher passives Mitglied der Sprachkonferenz - Sprachendeinrichtung D - sich durch Aktivität an seinen jeweiligen Aufnahmekanal auszeichnet und somit der Gruppe GR1 der aktiven Sprachendeinrichtungen zugeordnet wird. Die Sprachendeinrichtungen A bis D seien nun weitgehend aktiv und alle Sprachendeinrichtung A bis G werden entsprechend ihrer Aktivität durch die Aktivitätserkennungseinheit AE in aktive und passive Sprachendeinrichtungen sortiert bzw. gruppiert. Diese Gruppierungsinformation wird wiederum der Signalmischeinheit MIX übermittelt. Diese bildet in analoger Weise wie in den bisherigen Figuren 2 und 3 jeweils mehrere Mischsignale. Jeweils ein Mischsignal ist für die aktiven Sprachendeinrichtungen A, B, C und D sowie ein gemeinsames Mischsignal für die passiven Sprachendeinrichtungen E, F und G. Letztgenanntes Mischsignal ist dabei eine Überlagerung der Einzelsprachsignale ESS_{A}+ESS_{B}+ESS_{C}+ESS_{D} der vier aktiven Sprachendeinrichtungen A, B, C und D. Basierend auf ihre Aktivität und zuzüglich der Information der unterstützten CODECs wird nun durch die Kodiersteuereinheit KSE eine Gruppenbildung in die erste und zweite Gruppe GR1 bzw. GR2 durchgeführt, sodass in der ersten Gruppe GR1 die aktiven Sprachendeinrichtungen A, B, C und D zusammengefasst werden, sowie in der zweiten Gruppe GR2 die inaktiven Sprachendeinrichtungen E, F und G.

Analog zu Figur 2 werden weiterhin die Kodierer K1, K2, K3 und K4 verwendet um die Signale für die Sprachendeinrichtungen A, B, C, E, F und G zu erzeugen. Zur Erzeugung der Summensprachdaten SSD_{ABC} für die Sprachendeinrichtung D, die bisher inaktiv war doch nun aktiviert worden ist, wird in der Kodiereinheit KE eine neue Kodierinstanz K5 erzeugt, die die eingehende überlagerten Summensprachsignale ESS_{A}+ESS_{B}+ESS_{C} der Sprachendeinrichtungen A, B und C kodiert und als Summensprachdaten SSD_{ABC} an die Sprachendeinrichtung D übermittelt. Durch dieses dynamische Hinzunehmen von Kodierern kann flexibel auf Aktivitätsänderungen an den jeweiligen Aufnahmekanälen der Sprachendeinrichtungen reagiert werden. Die durch den Kodierer K4 erzeugten Summensprachdaten SSD_{ABCD} werden im Gegensatz zu Figur 2 lediglich den jetzt noch inaktiven Sprachendeinrichtung E, F und G zugeführt.

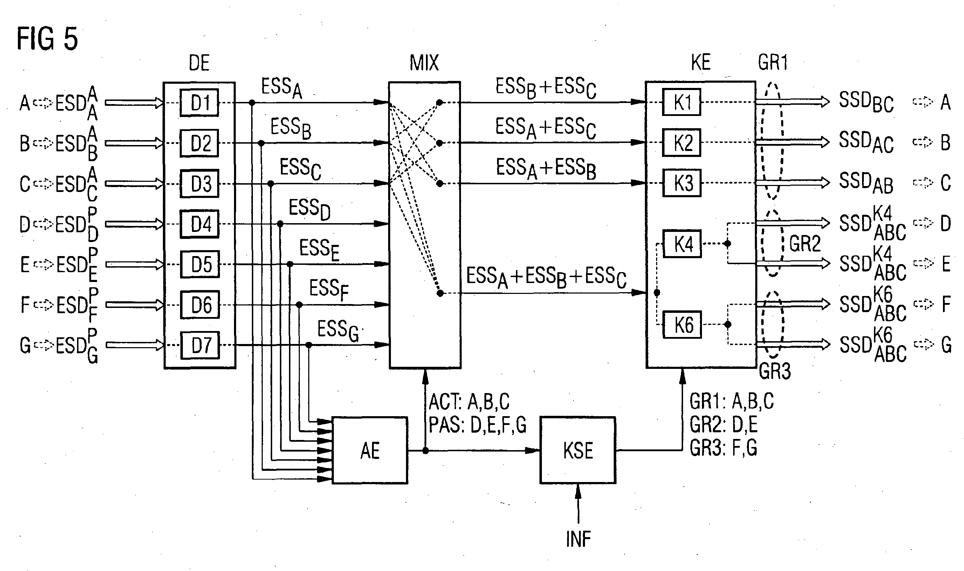

In Figur 5 erfolgt nun eine Erweiterung des erfindungsgemäßen Verfahrens, bei dem nicht alle Sprachendeinrichtungen einen übereinstimmenden Satz an CODECs unterstützen. Hierbei sei angenommen, dass die Endeinrichtung D und E jeweils einen gemeinsamen CODEC mit extrem hoher Sprachqualität unterstützen, während die Sprachendeinrichtungen F und G lediglich einen CODEC mit mittlerer Sprachqualität unterstützt. Die genannten Sprachendeinrichtungen D, E, F und G seien weiterhin wie in Figur 2 durch ihre Inaktivität gekennzeichnet. Die Sprachendeinrichtung A, B und C seien ebenfalls wie in Figur 2 aktiv. Die Aktivierungserkennungseinheit AE erkennt somit analog zu Figur 2, das die Sprachendeinrichtungen A, B, C aktiv sind und die Sprachendeinrichtungen D, E, F und G inaktiv sind und übermittelt diese Information an die Signalmischeinheit MIX sowie an die Kodiersteuereinheit KSE. Auf gleiche Weise wie in Figur 2 dargestellt, erzeugt die Signalmischeinheit MIX Mischsignale für die aktiven Sprachendeinrichtungen A, B, C sowie ein gemeinsames überlagertes Summensprachsignal ESS_{A}+ESS_{B}+ESS_{C} für alle passiven Sprachendeinrichtungen D, E, F und G. Die Kodiersteuereinheit KSE analysiert die übermittelte Information bezüglich Aktivität und Passivität zusammen mit Informationen INF bezüglich der durch die Sprachendeinrichtungen A bis G unterstützten CODECs und gruppiert die Sprachendeinrichtungen A bis G daraufhin, gemäß ihrer Aktivität und CODEC-Unterstützung in drei Gruppen GR1, GR2 und GR3. GR1 umfasst die aktiven Sprachendeinrichtungen A, B und C. GR2 umfasst die inaktiven Sprachendeinrichtungen, die den bestmöglichen CODEC unterstützten. Dies sei im Ausführungsbeispiel lediglich durch die Sprachendeinrichtungen D und E gegeben. Weiterhin gruppiert die Kodiersteuereinheit KSE diejenigen inaktiven Sprachendeinrichtungen in die Gruppe GR3, die inaktiv sind aber nicht die höchste Kodierqualität unterstützen. Dies seien die Sprachendeinrichtungen F und G.

Durch die Kodiereinheit KE werden daraufhin für die Sprachendeinrichtungen A, B, C der ersten Gruppe GR1, jeweils ein Kodierer K1, K2 und K3 erzeugt. Für die Gruppe GR2 wird eine Kodierinstanz K4 erzeugt und für die dritte Gruppe GR3 eine Kodierinstanz K6, wobei bei den beiden letztgenannten Kodierern das überlagerte Summensprachsignal ESS_{A}+ESS_{B}+ESS_{C} der drei aktiven Sprachendeinrichtungen A, B und C zugeführt wird. Durch den Kodierer K4 nun dieses zugeführte Summensprachsignal in für diesen Kodierer spezifische erste Summensprachdaten SSD^{K4}_{ABC} gewandelt und führt diese ersten Summensprachdaten SSD^{K4}_{ABC} den Sprachendeinrichtungen D und E zu. Weiterhin erzeugt der Kodierer K5 zweite Summensprachdaten SSD^{K6}_{ABC}, ebenfalls aus denselben Summensprachsignalen, die auch dem vierten Kodierer K4 zugeführt werden. Somit werden durch den Kodierer K6 kodierspezifische Summensprachdaten SSD^{K6}_{AB} erzeugt, die daraufhin den beiden inaktiven Sprachendeinrichtungen F und G zugeführt werden. Somit ermöglicht die Erfindung auch bei inhomogenen CODEC-Unterstützungen eine deutliche Verringerung der einzusetzenden Kodierern in der Kodiereinheit KE, ohne das auf einen suboptimalen Kodierer zurückgegriffen werden müsste, obwohl einzelne Sprachendeinrichtungen einen qualitativ besseren Kodierer unterstützen würden.

Auf analoge Weise kann die Erfindung auch auf mehrere Gruppen von inaktiven Sprachendeinrichtungen erweitert werden, so dass für Sprachendeinrichtungen einer jeweiligen Gruppe nach gewissen Kriterien eine optimale Kodierung erfolgt, wobei mögliche Optimierungskriterien im nächsten Abschnitt erläutert werden.

Während vorstehend die Gruppierung in zweite und dritte Gruppe GR2, GR3 weitgehend gemäß Qualitätskriterien der durchzuführenden Kodierung erfolgt ist (und somit gemäß der zu erreichenden Sprachqualität), kann die Kodiererauswahl auch nach anderen adaptiven Kriterien oder einer Kombination aus verschiedenen Kriterien erfolgen. So kann beispielsweise beachtet werden, dass so wenig Gruppen wie möglich gebildet werden. Alternativ kann ein Kriterium sein, dass zumindest einer der Gruppen GR2, GR3 sehr viele Sprachendeinrichtungen zugeordnet sind. Sofern keine beliebige Anzahl von Kodieren zur Verfügung steht und für einen bestimmten CODEC-Typ lediglich eine begrenzte Anzahl an Instanzen erzeugt werden kann, kann ein weiteres Kriterium sein, so wenig Instanzen wie möglich von einem CODEC-Typ zu erzeugen. Darüber hinaus kann der zu erwartende Rechenaufwand für die Kodierung bei der Auswahl der Kodierer einbezogen werden, so dass der Rechenaufwand im Sprachkonferenzserver niedrig gehalten oder minimiert wird. Des Weiteren kann die Übertragungsbandbreite zu erzeugten Summensprachdaten Beachtung finden, so dass sich keine zu Hohe Auslastung der Verbindungen zu den Sprachendeinrichtungen ergibt. Ein Kriterium, dass in Verbindung mit einem oder mehreren der vorgenannten Kriterien beachtet werden sollte, ist, dass eine Anzahl an gleichzeitig eingesetzten Kodierern über alle gleichzeitig stattfindenden Sprachkonferenzen minimiert wird.

Vorzugsweise kann die Kodiererauswahl nach gemischten Qualitäts- und Mengenkriterien erfolgen, so dass beispielsweise als wichtigstes Kriterium der qualitativ beste CODEC bevorzugt werden soll, der von mindestens einer weiteren Sprachendeinrichtung unterstützt wird bzw. von einer vorgegebenen Mindestanzahl an weiteren Sprachendeinrichtungen unterstützt wird. Für eine derartige Optimierung wird somit evtl. je Kriterium nicht das absolute Optimum gewählt, wobei - beispielsweise durch Bewertung der einzelnen Kriterien - ein Gesamtoptimum ermittelt wird und gemäß dieses Gesamtoptimums die Kodiererauswahl erfolgt. Vorzugsweise wird daher die Ermittlung der Gruppen GR2, GR3 und evtl. weiterer Gruppen gemeinsam mit der Ermittlung der zu verwendenden Kodierer durchgeführt, da sich beides gegenseitig beeinflusst und Rückkopplungen aufweist.

Unter der Voraussetzung, dass bei Sprachkonferenzen lediglich wenig Teilnehmer gleichzeitig aktiv an der Sprachkonferenz beteiligt sind, kann mittels des erfindungsgemäßen Verfahrens eine deutliche Reduzierung des Rechenaufwands in der Kodiereinheit KE erreicht werden. Die Analyse bezüglich Aktivitäten und Inaktivität kann dabei adaptiv geführt werden, sodass z. B. wenn ein Sprachkanal durch einen sehr stark erhöhten aktiven Sprachdatenfluss gekennzeichnet ist, die Aktivitätsschwelle derart verändert wird, das lediglich zwei oder maximal drei Sprachendeinrichtungen als aktive Sprachendeinrichtungen gruppiert werden. Somit kann erreicht werden, dass niemals ein Sprachengewirr von vielen aktiven Sprachendeinrichtungen entsteht, dem sowieso keiner der Teilnehmer der Sprachendeinrichtungen folgen könnte. Somit dient die Erfindung auch zusätzlich zu einer Straffung der Durchführung von Sprachkonferenzen und der Erhöhung der Sprachverständlichkeit und Sprachklarheit.

Um ein störungsfreies Aktivieren und Deaktivieren von Kodieren in der Kodiereinheit zu ermöglichen, kann es zweckmäßig sein, ein Signal lediglich zwischen Kodierern hin- und herzuschalten, die auf einem gleichen CODEC basieren. Beispielsweise kann ein aktives Signal das bisher durch den G.723-CODEC kodiert wurde, bei einem Übergang zur Inaktivität einer Gruppe von inaktiven Sprachendeinrichtungen zugeordnet werden die ebenfalls diesen CODEC G.723 verwenden. Auf diese Weise ist für die Sprachendeinrichtung das Umschalten von Kodierern in der Kodiereinheit KE transparent. Eine Information an die jeweilige Sprachendeinrichtung durch die Kodiereinheit KE ist nicht zwingend notwendig.

Alternativ könnte auch bei einem Kodiererwechsel ein Wechsel auf ein anderes Verfahren vorgesehen sein. Dabei wäre jedoch zusätzlich eine entsprechende Signalisierung an die Sprachendeinrichtung sinnvoll, die ein Umschalten auf den neuen CODEC signalisiert, so dass die Sprachendeinrichtung angewiesen wird, ebenfalls auf den passenden Codec umzuschalten.

Die Erfindung ist insbesondere vorteilhaft, wenn in einem Sprachkommunikationssystem mehrere Konferenzen gleichzeitig durchgeführt werden, da sich dadurch die einzusparende Anzahl an Kodierern deutlich erhöht. Die Anzahl an Dekodieren wird in der angegebenen Erfindung nicht reduziert, doch ist dies nicht nachteilig, da der Rechenaufwand der Kodiereinheit KE deutlich den Rechenaufwand der Dekodiereinheit DE übersteigt.

Für das Erkennen der Aktivität bzw. Inaktivität können verschiedenste Verfahren angewendet werden. Hierbei kann beispielsweise über einen gewissen Zeitabschnitt ein Maximalsignal bestimmt werden, das gegenüber einem Schwellwert verglichen wird. Darüber hinaus kann auch ein gemittelter Signalpegel bestimmt werden, der gegenüber Schwellwerten verglichen wird. Vorteilhaft ist auch die Erkennung einer Änderung von Signalpegeln bzw. die Erkennung einer Tendenz, sodass bereits bei leichter Erhöhung des Signalpegels erkannt werden kann, dass in Kürze wichtige Informationen über einen Aufnahmekanal übermittelt werden, so dass dieser Aufnahmekanal zu aktivieren ist. Insbesondere ist außerdem vorteilhaft wenn der Wechsel zwischen Aktivität und Inaktivität nicht in jeden Zeitabschnitt zu einer deutlichen Änderung der Gruppenzugehörigkeit bewirkt wird, da dies evtl. einen Nachteil in der erzeugten Sprachqualität nach sich zieht. Daher ist die Einbeziehung einer Hysterese oder eines Schwellwertschalters sinnvoll, sodass die Aktivität bzw. Inaktivität erst erkannt wird, wenn über einen längeren Zeitraum das Signal ein Vergleichswert über- bzw. unterschreitet. Außerdem können mehrere Schwellwerte definiert werden, sodass ein Wechsel in die eine Gruppe evtl. schneller abläuft als ein Wechsel in die andere Richtung. Damit kann der Tatsache Rechnung getragen werden, dass auch für aktive Teilnehmer Redepausen auftreten, die nicht sofort einen Wechsel in die inaktive Gruppe nach sich ziehen soll.

Die Erfindung lässt sich, obwohl anhand von Sprachendeinrichtungen erläutert, auch für Multimediaverbindungen oder Videoverbindungen generalisieren. Darüber hinaus lassen sich die vorgestellten Prinzipien auch für leitungsorientierte Kommunikationssysteme anwenden. Sprachendeinrichtungen sind vorzugsweise Telefone, doch kann es sich hierbei auch um Softwareapplikationen auf einem Arbeitsplatzrechner, häufig als Softclient bezeichnet, handeln. Bei dem Sprachkonferenzsystem kann es sich um eine zentrale Einrichtung eines Kommunikationssystem handeln, wobei auch eine dezentrale Architektur denkbar ist, wobei insbesondere eine serverseitige Signalmischung und -kodierung - unabhängig ob zentral oder dezentral - eine geringere Komplexität in den Endeinrichtungen ermöglicht.

## Patentansprüche

1. Verfahren zum Durchführen einer Sprachkonferenz- mit zumindest drei Sprachendeinrichtungen (A, B, C,...) in einem Kommunikationssystem, wobei die Sprachendeinrichtungen (A,B,C,...) jeweils
- einen Empfangskanal zum Empfangen von kodierten, bei der Sprachkonferenz anfallenden Sprachdaten (SSD) für ein Ausgeben von durch Dekodieren der empfangenen Sprachdaten (SSD) gebildeten Sprachsignalen an der jeweiligen Sprachendeinrichtung, und
- einen Aufnahmekanal zum Bereitstellen von kodierten Sprachdaten (ESD) für die Sprachkonferenz aufweisen, wobei die bereitzustellenden Sprachdaten (ESD) mittels Kodieren aus an der jeweiligen Sprachendeinrichtung aufgenommenen Sprachsignalen gebildet werden, wobei
- zumindest eine der Sprachendeinrichtungen (A,B,C,...) zumindest zeitweise derart einer ersten Gruppe (GR1) zugeordnet wird bzw. werden,
- für diese die über ihre jeweiligen Aufnahmekanäle bereitgestellten Sprachdaten (ESD) jeweils zu Einzelsprachsignalen (ESS) dekodiert werden,
- diese Einzelsprachsignale (ESS) zu einem Summensprachsignal überlagert werden und das Summensprachsignal in erste Summensprachdaten (SSD) kodiert wird,
- zumindest zwei der Sprachendeinrichtungen (A,B,C,...) zumindest zeitweise derart einer zweiten Gruppe (GR2) zugeordnet werden, so dass die zweite Gruppe (GR2) lediglich Sprachendeinrichtungen (A,B,C,...) umfasst, bei denen eine weitgehende Inaktivität an ihren jeweiligen Aufnahmekanälen erkannt wird, und wobei
- die ersten Summensprackdaten (SSD) den der zweiten Gruppe (GR2) zugeordneten Sprachendeinrichtungen (A,B,C,...) über ihre jeweiligen Empfangskanäle für eine jeweilige Ausgabe der ersten Summensprachdaten (SSD) zugeführt werden,
**dadurch gekennzeichnet,**
**dass** für eine der Sprachendeinrichtungen (A,B,C,...) der ersten Gruppe (GR1) ein endeinrichtungsspezifisches Summensprachsignal mittels Überlagerung der Einzelsprachsignale (ESS) der Sprachendeinrichtungen (A,B,C,...) der ersten Gruppe (GR1) gebildet wird und in endeinrichtungsspezifische Summensprachdaten (SSD) kodiert wird, und die kodierten endeinrichtungsspezifischen Summensprachdaten (SSD) über den zugehörigen Empfangskanal der Sprachendeinrichtung (A,B,C,...) für eine endeinrichtungsspezifische Ausgabe zugeführt wird.

2. Verfahren nach Anspruch 1,
**dadurch gekennzeichnet,**
**dass** die Zuordnung von Sprachendeinrichtungen (A,B,C,...) zur ersten Gruppe (GR1) derart erfolgt, dass die erste Gruppe (GR1) lediglich Sprachendeinrichtungen (A,B,C,...) umfasst, bei denen eine weitgehende Aktivität an ihren jeweiligen Aufnahmekanälen erkannt wird.

3. Verfahren nach einem der vorhergehenden Ansprüche,
**dadurch gekennzeichnet,**
**dass** die erste (GR1) und/oder die zweite Gruppe (GR2)
- nach Ablauf eines Zeitabschnitts und/oder
- durch Erkennen einer Aktivitätsänderung an einem der jeweiligen Aufnahmekanäle und/oder
- durch Erkennen von Benutzeraktionen an einem der Sprachendeinrichtungen (A,B,C,...)
neu gebildet wird.

4. Verfahren nach einem der vorhergehenden Ansprüche,
**dadurch gekennzeichnet,**
**dass** das Summensprachsignal in zweite, von den ersten Summensprachdaten (SSD^{K4}) verschiedenen Summensprachdaten (SSD^{K6}) kodiert wird,
**dass** zumindest zwei der Sprachendeinrichtungen (F,G) zumindest zeitweise derart einer dritten Gruppe (GR3) zugeordnet werden, so dass die dritte Gruppe (GR3) lediglich Sprachendeinrichtungen (A,B,C,...) umfasst, bei denen eine weitgehende Inaktivität an ihren jeweiligen Aufnahmekanälen erkannt wird, und
**dass** die zweiten Summensprachdaten (SSD^{K6}) den der dritten Gruppe (GR3) zugeordneten Sprachendeinrichtungen (F,G) über ihre jeweiligen Empfangskanäle für eine jeweilige Ausgabe der zweiten Summensprachdaten (SSD^{K6}) zugeführt werden.

5. Verfahren nach einem der vorhergehenden Ansprüche,
**dadurch gekennzeichnet,**
**dass** das Kodieren des Summensprachsignals in die ersten Summensprachdaten (SSD^{K4}) durch genau einen ersten Kodierer (K4) erfolgt.

6. Verfahren nach einem der vorhergehenden Ansprüche,
**dadurch gekennzeichnet,**
**dass** das Kodieren des Summensprachsignals in die zweiten Summensprachdaten (SSD^{K6}) durch genau einen zweiten, vom ersten Kodierer (K4) verschiedenen Kodierer (K6) erfolgt.

7. Verfahren nach einem der vorhergehenden Ansprüche,
**dadurch gekennzeichnet,**
**dass** eine Kodiererauswahl adaptiv erfolgt.

8. Verfahren nach Anspruch 7,
**dadurch gekennzeichnet,**
**dass** das adaptive Auswählen eines der jeweiligen Kodierer (K1, K2,...) derart erfolgt, dass
- eine Qualität der Ausgabe an betreffenden Sprachendeinrichtungen (A,B,C,...) optimiert wird, oder
- eine Übertragungsbandbreite am jeweiligen Empfangskanal betreffende Sprachendeinrichtungen (A,B,C,...) optimiert wird, oder
- eine Anzahl von für die Sprachkonferenz gleichzeitig eingesetzten Kodierern (K1, K2,...) minimiert wird.

9. Verfahren nach einem der vorhergehenden Ansprüche,
**dadurch gekennzeichnet,**
**dass** bei Erkennen von zumindest zeitweise weitgehender Inaktivität einer der ersten Gruppe (GR1) zugeordneten Sprachendeinrichtung (A, B, C,...)
- die Zuordnung dieser inaktiven Sprachendeinrichtung (C) zur ersten Gruppe (GR1) aufgehoben wird, und
- diese inaktive Sprachendeinrichtung (C) zur zweiten Gruppe (GR2) zugeordnet wird.

10. Verfahren nach einem der vorhergehenden Ansprüche,
**dadurch gekennzeichnet,**
**dass** bei Erkennen von zumindest zeitweise weitgehender Inaktivität einer der ersten Gruppe (GR1) zugeordneten Sprachendeinrichtung (C), ein bisher zur Übermittlung von Sprachdaten an diese inaktive Sprachendeinrichtung zugeordneter Kodierer (K3) als verfügbar gekennzeichnet wird.

11. Verfahren nach einem der vorhergehenden Ansprüche,
**dadurch gekennzeichnet,**
**dass** bei Erkennen von zumindest zeitweise weitgehender Aktivität einer der zweiten Gruppe (GR2) zugeordneten Sprachendeinrichtung (D),
- die Zuordnung dieser aktiven Sprachendeinrichtung (D) zur zweiten Gruppe (GR2) aufgehoben wird, und
- diese aktive Sprachendeinrichtung (D) zur ersten Gruppe (GR1) zugeordnet wird.

12. Verfahren nach einem der vorhergehenden Ansprüche,
**dadurch gekennzeichnet,**
**dass** bei Erkennen von zumindest zeitweise weitgehender Aktivität einer der zweiten Gruppe (GR2) zugeordneten Sprachendeinrichtung (D),
- ein endeinrichtungsspezifisches Summensprachsignal für die aktive Sprachendeinrichtung (D) gebildet wird, und
- ein als verfügbar gekennzeichneter Kodierer (K5) der aktiven Sprachendeinrichtung (D) zugeordnet wird, und
- mit diesem Kodierer (K5) das endeinrichtungsspezifische Summensprachsignal für die aktive Sprachendeinrichtung (D) in für die aktive Sprachendeinrichtung (D) spezifische Summensprachdaten (SSD_{ABC}) kodiert wird.

13. Sprachkonferenzsystem für mehrere Sprachendeinrichtungen in einem Kommunikationssystem,
**gekennzeichnet durch**
Mittel zur Durchführung des Verfahrens gemäß einem der vorhergehenden Verfahrensansprüche.

14. Sprachkonferenzsystem nach Anspruch 13,
**gekennzeichnet durch**
- eine Signalmischeinheit (MIX) zur Überlagerung der Einzelsprachsignale (ESS) der der ersten Gruppe(GR1) zugeordneten Sprachendeinrichtungen (A,B,C,...) zum Summensprachsignal und/oder zur Überlagerung jeweils einer Auswahl der Einzelsprachsignale (ESS) der der ersten Gruppe (GR1) zugeordneten Sprachendeinrichtungen (A, B, C,...) zu endeinrichtungsspezifischen Summensprachsignalen, und/oder
- eine Signalmischsteuereinheit (AE) zur Auswahl der **durch** die Signalmischeinheit (MIX) zu überlagernden Einzelsprachsignale (ESS) aus den eingehenden Einzelsprachsignale (ESS) der Sprachendeinrichtungen (A,B,C,...) der Sprachkonferenz und/oder
- eine Kodiereinheit (KE) mit mehreren zur Verfügung stehenden Kodieren (K1, K2,...) zur Kodierung des Summensprachsignals in die ersten Summensprachdaten (SSD) und der endeinrichtungsspezifischen Summensprachsignale in endeinrichtungsspezifische Summensprachdaten (SSD) mittels jeweils eines ausgewählten Kodierers (K1, K2,...), und/oder
- eine Kodiersteuereinheit (KSE) zur Auswahl und/oder Konfiguration von **durch** die Kodiereinheit (KE) zu verwendenden Kodierern (K1, K2,...), die jeweils für das Summensprachsignal und die endeinrichtungsspezifischen Summensprachsignale ausgewählt werden.

## Claims

1. Method for carrying out a voice conference with at least three voice terminals (A, B, C, ...) in a communication system, wherein the voice terminals (A, B, C,...) in each case comprise
- a receiving channel for receiving coded voice data (SSD) produced in the voice conference for outputting voice signals formed by decoding of the received voice data (SSD) at the respective voice terminal, and
- a recording channel for providing coded voice data (ESD) for the voice conference, wherein the voice data (ESD) to be provided are formed by coding from voice signals recorded at the respective voice terminal, wherein
- at least one of the voice terminals (A, B, C, ...) is/are associated at least temporarily thereby with a first group (GR1),
- for which the voice data (ESD) provided via its respective recording channels are decoded in each case into individual voice signals (ESS),
- these individual voice signals (ESS) are superposed to form a sum voice signal and the sum voice signal is coded into first sum voice data (SSD),
- at least two of the voice terminals (A, B, C, ...) are associated at least temporarily with a second group (GR2), so that the second group (GR2) comprises only voice terminals (A, B, C, ...), wherein an extensive inactivity at their respective recording channels is recognized, and wherein
- the first sum voice data (SSD) are supplied to the voice terminals (A, B, C, ...) associated with the second group (GR2), via their respective receiving channels for a respective output of the first sum voice data (SSD),
**characterized in that**,
for one of the voice terminals (A, B, C, ...) of the first group (GR1), a terminal-specific sum voice signal is formed by superposing the individual voice signals (ESS) of the voice terminals (A, B, C, ...) of the first group (GR1) and is coded into terminal-specific sum voice data (SSD), and the coded terminal-specific sum voice data (SSD) is supplied via the associated receiving channel of the voice terminal (A, B, C, ...) for a terminal-specific output.

2. Method according to Claim 1,
**characterized in that**,
the association of voice terminals (A, B, C, ...) with the first group (GR2) occurs in such a manner that the first group (GR1) comprises only voice terminals (A, B, C, ...) in which an extensive activity on its respective recording channel is detected.

3. Method according to any one of the preceding claims,
**characterized in that**,
the first group (GR1) and/or the second group (GR2) is/are newly formed
- after the elapsing of a time period and/or
- by the detection of a change in activity on one of the respective recording channels and/or
- by the detection of user actions at one of the voice terminals (A, B, C, ...).

4. Method according to any one of the preceding claims,
**characterized in that**,
the sum voice signal is coded into second sum voice data (SSD^{K6}) different from the first sum voice data (SSD^{K4}),
**in that** at least two of the voice terminals (F, G) are associated at least temporarily in such a manner with a third group (GR3) so that the third group (GR3) comprises only voice terminals (A, B, C, ...) in which an extensive inactivity on its respective recording channels is detected, and
**in that** the second sum voice data (SSD^{K6}) are supplied to the voice terminals (F, G) associated with the third group (GR3) via their respective receiving channels for a respective output of the second sum voice data (SSD^{K6}).

5. Method according to any one of the preceding claims,
**characterized in that**,
the coding of the sum voice signal into the first sum voice data (SSD^{K4}) is carried out by exactly one first coder (K4).

6. Method according to any one of the preceding claims,
**characterized in that**,
the coding of the sum voice signal into the second sum voice data (SSD^{K6}) is carried out by exactly one second coder (K6) different from the first coder (K4).

7. Method according to any one of the preceding claims,
**characterized in that**,
a coder selection is carried out adaptively.

8. Method according to Claim 7,
**characterized in that**,
the adaptive selection of one of the respective coders (K1, K2, ...) is carried out in such a manner that
- a quality of the output to respective voice terminals (A, B, C, ...) is optimized, or
- a transmission band width on the respective receiving channel of respective voice terminals (A, B, C, ...) is optimized, and/or
- a number of coders (K1, K2, ...) used simultaneously for the voice conference is minimized.

9. Method according to any one of the preceding claims,
**characterized in that**,
in the case of the detection of at least temporarily extensive inactivity of one of the voice terminals (A, B, C, ...) associated with the first group (GR1),
- the association of this inactive terminal (C) with the first group (GR1) is suspended, and
- this inactive voice terminal (C) is associated with the second group (GR2).

10. Method according to any one of the preceding claims,
**characterized in that**,
in the case of the detection of at least temporarily extensive inactivity of a voice, terminal (C) associated with the first group (GR1), a coder (K3) associated so far with the transmission of voice data to this inactive voice terminal is marked as available.

11. Method according to any one of the preceding claims,
**characterized in that**,
in the case of the detection of at least temporarily extensive activity of a voice terminal (D) associated with the second group (GR2),
- the association of this active voice terminal (D) with the second group (GR2) is suspended, and
- this active voice terminal (D) is associated with the first group (GR1),

12. Method according to any one of the preceding claims,
**characterized in that**,
in the case of the detection of at least temporarily extensive activity of a voice terminal (D) associated with the second group (GR2),
- a terminal-specific sum voice signal for the active voice terminal (D) is formed, and
- a coder (K5) marked as available is associated with the active voice terminal (D), and
- with this coder (K5), the terminal-specific sum voice signal for the active voice terminal (D) is coded into sum voice data (SSD_{ABC}) specific for the active voice terminal (D).

13. Voice conference system for several voice terminals in a communication system,
**characterized by**
means for carrying out the method according to any one of the preceding process claims.

14. Voice conference system according to Claim 13,
**characterized by**
- a signal mixing unit (MIX) for superposing the individual voice signals (ESS) of the voice terminals (A, B, C, ...) associated with the first group (GR1) to form the sum voice signal and/or for superposing in each case a selection of the individual voice signals (ESS) of the voice terminals (A, B, C, ...) associated with the first group (GR1) to form terminal-specific sum voice signals, and/or
- a signal mixing unit (AE) for selecting the individual voice signals (ESS) to be superposed by the signal mixing unit (MIX) from the incoming individual voice signals (ESS) of the voice terminals (A, B, C, ...) of the voice conference, and/or
- a coding unit (KE) with several coders (K1, K2, ...) available for coding the sum voice signal into the first sum voice data (SSD) and the terminal-specific sum voice signals into terminal-specific sum voice data (SSD) in each case by means of a selected coder (K1, K2, ...), and/or
- a coding control unit (KSE) for selecting and/or configuring coders (K1, K2, ...) to be used by the coder unit (KE), which in each case are selected for the sum voice signal and the terminal-specific sum voice signals.

## Revendications

1. Procédé de mise en oeuvre d'une conférence vocale avec au moins trois terminaux vocaux (A, B, C, ...) dans un système de communication, dans lequel les terminaux vocaux (A, B, C, ...) comprennent dans chaque cas :
- un canal de réception servant à recevoir des données vocales codées (SSD) produites dans la conférence vocale pour sortir des signaux vocaux formés par le décodage des données vocales (SSD) reçues au niveau du terminal vocal respectif, et
- un canal d'enregistrement servant à fournir des données vocales codées (ESD) pour la conférence vocale, dans lequel les données vocales (ESD) à fournir sont formées par le codage de signaux vocaux enregistrés au niveau du terminal vocal respectif, dans lequel
- au moins un des terminaux vocaux (A, B, C, ...) est associé au moins temporairement par ce moyen à un premier groupe (GR1),
- pour lequel les données vocales (ESD) fournies par l'intermédiaire de ses canaux d'enregistrement respectifs sont décodées dans chaque cas en signaux vocaux individuels (ESS),
- ces signaux vocaux individuels (ESS) sont superposés pour former un signal vocal total et le signal vocal total est codé en premières données vocales totales (SSD),
- au moins deux des terminaux vocaux (A, B, C, ...) sont associés au moins temporairement à un deuxième groupe (GR2), de façon que le deuxième groupe (GR2) comprenne seulement les terminaux vocaux (A, B, C, ...), dans lequel une inactivité prolongée au niveau de leurs canaux d'enregistrement respectifs est reconnue, et dans lequel
- les premières données vocales totales (SSD) sont fournies aux terminaux vocaux (A, B, C, ...) associés au deuxième groupe (GR2) par l'intermédiaire de leurs canaux de réception respectifs pour une sortie respective des premières données vocales totales (SSD),
**caractérisé en ce que**,
pour un des terminaux vocaux (A, B, C, ...) du premier groupe (GR1), un signal vocal total spécifique d'un terminal est formé par la superposition des signaux vocaux individuels (ESS) des terminaux vocaux (A, B, C, ...) du premier groupe (GR1) et est codé en données vocales totales (SSD) spécifiques d'un terminal, et les données vocales totales (SSD) codées spécifiques d'un terminal sont fournies par l'intermédiaire du canal de réception associée du terminal vocal (A, B, C, pour une sortie spécifique d'un terminal.

2. Procédé selon la revendication 1,
**caractérisé en ce que**,
l'association des terminaux vocaux (A, B, C, ...) au premier groupe (GR1) s'effectue d'une telle manière que le premier groupe (GR1) comprend seulement des terminaux vocaux (A, B, C, ...) dans lesquels une activité intense sur son canal d'enregistrement respectif est détectée.

3. Procédé selon l'une quelconque des revendications précédentes,
**caractérisé en ce que**,
le premier groupe (GR1) et/ou le deuxième groupe (GR2) est/sont nouvellement formé(s)
- après l'écoulement d'une période de temps et/ou
- par la détection d'un changement d'activité sur un des canaux d'enregistrement respectifs et/ou
- par la détection d'actions de l'utilisateur au niveau d'un des terminaux vocaux (A, B, C, ...).

4. Procédé selon l'une quelconque des revendications précédentes,
**caractérisé en ce que**,
le signal vocal total est codé en secondes données vocales totales (SSD^{K6}) différentes des premières données vocales totales (SSDK⁴),
**en ce qu'**au moins deux des terminaux vocaux (F, G) sont associés au moins temporairement à un troisième groupe (GR3) de façon que le troisième groupe (GR3) comprenne seulement des terminaux vocaux (A, B, C, ...) dans lesquels une inactivité prolongée sur ses canaux d'enregistrement respectifs est détectée, et
**en ce que** les secondes données vocales totales (SSD^{K6}) sont fournies aux terminaux vocaux (F, G) associés au troisième groupe (GR3) par l'intermédiaire de leurs canaux de réception respectifs pour une sortie respective des secondes données vocales totales (SSD^{K6}).

5. Procédé selon l'une quelconque des revendications précédentes,
**caractérisé en ce que**,
le codage du signal vocal total en premières données vocales totales (SSD^{K4}) est réalisé par exactement un premier codeur (K4).

6. Procédé selon l'une quelconque des revendications précédentes,
**caractérisé en ce que**,
le codage du signal vocal total en secondes données vocales totales (SSD^{K6}) est réalisé par exactement un second codeur (K6) différent du premier codeur (K4).

7. Procédé selon l'une quelconque des revendications précédentes,
**caractérisé en ce que**,
la sélection d'un codeur est réalisée de manière adaptative.

8. Procédé selon la revendication 7,
**caractérisé en ce que**,
la sélection adaptative d'un des codeurs respectifs (K1, K2, ...) est réalisée de manière à ce que
- la qualité de la sortie vers les terminaux vocaux (A, B, C, ...) respectifs soit optimisée, ou
- une largeur de bande d'émission sur le canal de réception respectif des terminaux vocaux (A, B, C, ...) respectifs soit optimisée, et/ou
- le nombre de codeurs (K1, K2, ...) utilisés simultanément pour la conférence vocale soit minimisé.

9. Procédé selon l'une quelconque des revendications précédentes,
**caractérisé en ce que**,
dans le cas de la détection d'une inactivité au moins temporairement prolongée d'un des terminaux vocaux (A, B, C, ...) associés au premier groupe (GR1),
- l'association de ce terminal (C) inactif au premier groupe (GR1) est suspendue, et
- ce terminal vocal (C) inactif est associé au deuxième groupe (GR2).

10. Procédé selon l'une quelconque des revendications précédentes,
**caractérisé en ce que**,
dans le cas de la détection d'une inactivité au moins temporairement prolongée d'un terminal vocal (C) associé au premier groupe (GR1), un codeur (K3) associé jusqu'à présent à l'émission des données vocales vers ce terminal vocal inactif est signalé comme disponible.

11. Procédé selon l'une quelconque des revendications précédentes,
**caractérisé en ce que**,
dans le cas de la détection d'une activité au moins temporairement intense d'un terminal vocal (D) associé au deuxième groupe (GR2),
- l'association de ce terminal vocal (D) actif au deuxième groupe (GR2) est suspendue, et
- ce terminal vocal (D) actif est associé au premier groupe (GR1).

12. Procédé selon l'une quelconque des revendications précédentes,
**caractérisé en ce que**,
dans le cas de la détection d'une activité au moins temporairement intense d'un terminal vocal (D) associé au deuxième groupe (GR2),
- un signal vocal total spécifique d'un terminal pour le terminal vocal (D) actif est formé, et
- un codeur (K5) signalé comme disponible est associé au terminal vocal (D) actif, et
- avec ce codeur (K5), le signal vocal total spécifique d'un terminal pour le terminal vocal (D) actif est codé en données vocales totales (SSD_{ABC}) spécifiques du terminal vocal (D) actif.

13. Système de conférence vocale pour plusieurs terminaux vocaux dans un système de communication,
**caractérisé par**
des moyens permettant de mettre en oeuvre le procédé selon l'une quelconque des revendications précédentes du procédé.

14. Système de conférence vocale selon la revendication 13,
**caractérisé par**
- une unité de mélange de signaux (MIX) servant à superposer les signaux vocaux individuels (ESS) des terminaux vocaux (A, B, C, ...) associés au premier groupe (GR1) pour former le signal vocal total et/ou à superposer dans chaque cas une sélection des signaux vocaux individuels (ESS) des terminaux vocaux (A, B, C, ...) associés au premier groupe (GR1) pour former des signaux vocaux totaux spécifiques d'un terminal et/ou
- une unité de mélange de signaux (AE) servant à sélectionner les signaux vocaux individuels (ESS) à superposer par l'unité de mélange de signaux (MIX) parmi les signaux vocaux individuels (ESS) entrants des terminaux vocaux (A, B, C, ...) de la conférence vocale, et/ou
- une unité de codage (KE) à plusieurs codeurs (K1, K2, ...) disponibles pour coder le signal vocal total en premières données vocales totales (SSD) et les signaux vocaux totaux spécifiques d'un terminal en données vocales totales (SSD) spécifiques d'un terminal dans chaque cas au moyen d'un codeur (K1, K2, ...) sélectionné, et/ou
- une unité de commande de codage (KSE) servant à sélectionner et/ou à configurer les codeurs (K1, K2, ...) à utiliser par l'unité de codage (KE), lesquels sont sélectionnés dans chaque cas pour le signal vocal total et les signaux vocaux totaux spécifiques d'un terminal.
